# EUROPÄISCHE PATENTSCHRIFT

(11) **EP 3 765 575 B1**
(45) Veröffentlichungstag und Bekanntmachung des Hinweises auf die Patenterteilung: **01.07.2026**
(21) Anmeldenummer: 19708813.1
(22) Anmeldetag: 27.02.2019
(51) Int. Cl.: H02G 3/04, C09J 7/29, C09J 7/21, B60R 16/02, B32B 7/12, B32B 5/26, B32B 5/06, B32B 5/02, D03D 15/283

(54) **KLEBEBAND INSBESONDERE WICKELBAND ZUM UMMANTELN VON KABELN IN AUTOMOBILEN**
ADHESIVE TAPE, IN PARTICULAR WRAPPING TAPE FOR SHEATHING CABLES IN AUTOMOBILES
BANDE ADHÉSIVE, EN PARTICULIER BANDE ENVELOPPANTE, DESTINÉE À ENVELOPPER DES CÂBLES DANS DES AUTOMOBILES

(30) Priorität: 12.03.2018 DE 202018101383 U
(43) Veröffentlichungstag der Anmeldung: 20.01.2021
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2019/054886
(87) Internationale Veröffentlichungsnummer: WO 2019/174917

(56) Entgegenhaltungen:
- EP-B2- 1 911 824
- WO-A1-2009/086570
- DE-B3- 102004 015 019

## Beschreibung

Die Erfindung betrifft die Verwendung eines Klebebandes als Wickelband zum Ummanteln von Kabeln in Automobilen, mit einem bandförmigen textilen Träger, welcher zumindest eine erste Schicht aus einem Gewebe und eine zweite Schicht aus einem Vlies aufweist, die durch eine Polymerschicht und/oder durch beide Schichten durchdringende Fäden miteinander gekoppelt sind, und mit einer auf wenigstens eine Seite des Trägers aufgetragenen Klebeschicht.

Klebebänder und insbesondere Wickelbänder zum Ummanteln von Automobilen müssen eine Vielfalt an verschiedenen und zum Teil widerstreitenden Anforderungen erfüllen. So wird für solche Klebebänder typischerweise eine hohe Medienbeständigkeit gegenüber beispielsweise Öl oder Benzin gefordert. Darüber hinaus ist eine gesteigerte Temperaturbeständigkeit beispielsweise im Bereich von minus 50° C, insbesondere minus 40° C bis zu plus 150°C und mehr erforderlich. Ferner werden oftmals geräuschdämpfende Eigenschaften als vorteilhaft angesehen, um insbesondere Klappergeräusche in eingebautem Zustand zu vermeiden. Darüber hinaus ist meistens auch eine einfache Verarbeitung dergestalt wünschenswert, dass sich die fraglichen Klebebänder per Hand einreißen lassen.

In neuerer Zeit werden zunehmend erhöhte mechanische Anforderungen an die betreffenden Klebebänder gestellt. So soll beispielsweise bei einer scheuernden Beanspruchung der Abrieb nicht zu groß sein, um die jeweils umwickelten Kabel vor Beschädigungen zu schützen. Darüber hinaus kommen heutzutage zunehmend weitere Erfordernisse dergestalt ins Spiel, dass eine erhöhte Schnittfestigkeit bzw. Schlagfestigkeit der Klebebänder gefordert wird.

Das lässt sich darauf zurückführen, dass die fraglichen Klebebänder oftmals anstelle von beispielsweise Schlauchumhüllungen elektrische Zuleitungen vor einem Zerreißen schützen sollen.

Derartige Anforderungen ergeben sich beispielsweise für den Fall, dass das mit einem solchen Klebeband ausgerüstete Kraftfahrzeug in einen Aufprall und insbesondere Seitenaufprall verwickelt wird. Hierbei besteht die Gefahr, dass elektrische Zuleitungen zu beispielsweise Türschlössern gekappt oder zumindest beschädigt werden.

Als Folge hiervon können die fraglichen Türschlösser oftmals nicht mehr geöffnet werden. Das gilt dann auch für zugehörige Kraftfahrzeugtüren, was den Einsatz von beispielsweise eintreffendem Rettungspersonal erschwert. Bisher stehen an dieser Stelle keine erfolgversprechenden Lösungen zur Verfügung.

So befasst sich der nächst kommende und gattungsbildende Stand der Technik nach der EP 1 911 824 B2 zwar insgesamt mit einem Kabelwickelband, welches über einen zweischichtigen textilen Träger verfügt. Bei der ersten textilen Schicht handelt es sich um ein Gewebe. Die zweite textile Schicht ist als Vliesstoff ausgebildet. Das Vlies ist seinerseits als Nähvlies ausgelegt. Die beiden textilen Schichten werden durch einen Acrylatklebstoff miteinander verbunden.

Das Gewebe der ersten textilen Schicht und/oder das Vlies der zweiten textilen Schicht können insgesamt aus einem Polyamid-Werkstoff und/oder einem Polyester-Werkstoff gebildet werden. Da das Vlies als Nähvlies ausgelegt ist, wird zwar eine erhöhte Reißfestigkeit zur Verfügung gestellt. Allerdings sind derartige Vliese nach wie vor nicht besonders schlagfest oder schnittfest.

Hierbei ist zu berücksichtigen, dass das zuvor beschriebene Klebeband in eingebautem Zustand mit nach außen weisendem Gewebe ausgerüstet ist, während die Klebeschicht auf das Vlies aufgebracht wird.

Ein vergleichbares Klebeband ist Gegenstand der WO 2005/085379 A1. Hier wird erneut auf ein hoch abriebfestes und geräuschdämpfendes Band für die Bandagierung von Kabelbäumen abgestellt. Der zugehörige Träger verfügt über eine erste Deckschicht und eine zweite Deckschicht, die mithilfe einer weiteren Zwischenschicht über die gesamte Fläche fest miteinander verbunden sind. Die erste Deckschicht kann als Gewebe ausgebildet sein. Bei der zweiten Deckschicht handelt es sich demgegenüber um ein Velours, Gelege, Gewebe oder Gewirke, kommt also insgesamt ein Vlies nicht zum Einsatz. Dieses kann vielmehr als Zwischenschicht bei der bekannten Lehre Anwendung finden.

Bei dem schließlich noch zu berücksichtigenden Stand der Technik nach der WO 2009/086570 A1 geht es insgesamt um eine Schutzvorrichtung, die ebenfalls mit einem Verbund aus einer mechanischen Schutzschicht, einer polymeren Verbindungsschicht und einer Klebeschicht ausgebildet ist. Die mechanische Schutzschicht kann ein Vlies sein. Dabei können grundsätzlich auch hochfeste organische Fasern wie beispielsweise aromatische Polyamide zum Einsatz kommen. Eine zusätzliche Schicht aus einem Gewebe fehlt jedoch.

Der Erfindung liegt das technische Problem zugrunde, ein Klebeband und insbesondere Wickelband zum Ummanteln von Kabeln in Automobilen des eingangs beschriebenen Aufbaus so weiterzuentwickeln, dass bei nach wie vor gegebener hoher Abriebfestigkeit insgesamt die Stichfestigkeit bzw. Schlagfestigkeit gegenüber bekannten Ausführungsformen gesteigert wird.

Zur Lösung dieser technischen Problemstellung ist eine gattungsgemäße Verwendung im Rahmen der Erfindung dadurch gekennzeichnet, dass das Vlies aus einem aromatischen Polyamid hergestellt ist und die zweite Schicht aus dem Vlies im eingebauten Zustand nach innen weist.

Tatsächlich hat es sich im Rahmen der Erfindung als besonders günstig erwiesen, wenn für die Herstellung des Vlieses auf spezielle Polyamide zurückgegriffen wird, nämlich aromatische Polyamide. Hierbei handelt es sich um Polyamide, bei denen die Amidgruppen an aromatische Gruppen gebunden sind. Solche aromatischen Polyamide werden unter Handelsnamen wie beispielsweise "Kevlar" oder auch "Twaron" vertrieben und stehen grundsätzlich zur Verfügung.

Tatsächlich zeichnen sich die fraglichen aromatischen Polyamide zur Herstellung des Vlieses bzw. der zweiten Schicht aus dem Vlies dadurch aus, dass sie eine hohe Festigkeit und auch hohe Schlagzähigkeit sowie Bruchdehnung aufweisen. Als Folge hiervon dient die zweite Schicht bzw. Vliesschicht auf Basis der aromatischen Polyamide im Regelfall dazu, bei der erfindungsgemäßen Verwendung etwaige Schlag- oder Schnittbeanspruchungen aufnehmen zu können. Zu diesem Zweck wird erfindungsgemäß die zweite Schicht aus dem Vlies in eingebautem Zustand nach innen weisend angeordnet. Das heißt, da das Klebeband als Wickelband zum Ummanteln von Kabeln in Automobilen zum Einsatz kommt, ist die Auslegung und Anordnung an dem fraglichen Kabel bzw. den mehreren Kabeln erfindungsgemäß so gewählt, dass die zweite Schicht aus dem Vlies in das Kabel umwickelndem Zustand nach innen weist. Zu diesem Zweck ist die zweite Schicht bzw. das Vlies auch mit der erforderlichen Klebeschicht ausgerüstet, um die Haftung des erfindungsgemäßen Klebebandes auf den Kabeln zu gewährleisten.

Demgegenüber ist die erste Schicht aus dem Gewebe im Allgemeinen nach außen weisend orientiert. Dadurch trifft eine schneidende oder schlagende Beaufschlagung des erfindungsgemäßen Klebebandes in eingebautem Zustand zunächst auf das Gewebe und erst im Anschluss auf die zweite Schicht aus dem Vlies und die hier vorgesehenen Fasern aus dem aromatischen Polyamid. Als Folge hiervon ist damit zu rechnen, dass das Gewebe etwaige Scheuerbeanspruchungen durch seine Anordnung nach außen hin weisend problemlos aufnimmt. Zusätzliche Schnittbeanspruchungen bzw. Schlagbeanspruchungen werden dann mit Hilfe des darunter angeordneten Vlieses besonders wirkungsvoll aufgenommen. Denn die eingesetzten Fasern aus dem aromatischen Polyamid sorgen zunächst einmal für eine Dämpfung etwaiger Schlagbeanspruchungen innerhalb der Vliesschicht. Außerdem werden etwaige Schnitte oder Schneidbeanspruchungen von dem betreffenden Vlies problemlos aufgrund der hohen Zugfestigkeit und Zähigkeit der einzelnen Fasern aufgenommen. Hinzu kommt, dass das Vlies zugleich etwaige Geräusche dämpft.

Die in eingebautem Zustand nach außen hin weisende Schicht aus dem Gewebe sorgt für die zusätzlich erforderliche Abriebbeständigkeit. Zu diesem Zweck weist das Gewebe regelmäßig Fäden aus Polyamid (PA) und/oder Polyester (PET) auf. Auch Kombinationen sind denkbar. Gewebe aus derartigen Fäden sind besonders abriebbeständig, wie beispielhaft die zuvor bereits genannte EP 1 911 824 B2 belegt. Tatsächlich lassen sich auf diese Weise für das erfindungsgemäße Klebeband zumindest mittlere Abriebbeständigkeiten der Abriebklasse C nach LV 312 realisieren. Im Regelfall wird sogar ein hoher Abriebschutz entsprechend der Klasse D, teilweise sogar noch höher bis zur Klasse E beobachtet.

In diesem Zusammenhang verfügen die Fäden des Gewebes typischerweise über eine Feinheit von wenigstens 100 dtex. Meistens werden sogar Feinheiten von 150 dtex und mehr beobachtet. Die Anzahl der Kett- und Schussfäden in dem fraglichen Gewebe kann 5 Fäden/cm bis zu 60 Fäden/cm oder sogar bis zu 80 Fäden/cm betragen. Außerdem wird typischerweise mit gleichstarken Kett- und Schussfäden gearbeitet. Das heißt, der Rückgriff auf viel dickere Schussfäden als Kettfäden entsprechend beispielsweise dem Stand der Technik nach der EP 2 322 385 A1 ist ausdrücklich nicht erforderlich. Vielmehr sorgt der zweischichtige Aufbau mit dem Gewebe und dem Vlies aus den aromatischen Polyamidfasern kombinatorisch dafür, dass sowohl die Anforderungen der Schlagfestigkeit nach LV 312-3 (2009) erfüllt werden als auch die Abriebklasse C und insbesondere D und mehr nach LV 312-1 (2009) beobachtet wird.

Bei dem eingesetzten Vlies handelt es sich vorteilhaft um ein mechanisch verfestigtes Nadelvlies. Zu diesem Zweck kann das Vlies durch Wasserstrahlen und/oder Luft und/oder Nadeln mechanisch verfestigt werden. Die Erfindung verzichtet also bewusst auf ein Nähvlies, wie es im Rahmen der EP 1 911 824 B2 als unverzichtbar angesehen wird.

Denn es hat sich herausgestellt, dass ein Nähvlies zwar eine hohe Zugfestigkeit in Längsrichtung aufweist. Derartiges ist bei dem erfindungsgemäßen Verbund jedoch weder erforderlich noch notwendig, so dass auf den zusätzlichen Schritt des Übernähens des Vlieses verzichtet und demgemäß die Herstellung vereinfacht und kostengünstig gestaltet werden kann. Denn mechanisch durch Wasserstrahlen und/oder Nadeln verfestigte Vliese lassen sich besonders einfach und kostengünstig herstellen. Die erforderliche Zugfestigkeit und Reißfestigkeit des erfindungsgemäßen Klebebandes ergibt sich dabei insgesamt durch die kombinatorische Wirkung zwischen dem Vlies und dem Gewebe.

Der textile Träger verfügt im Allgemeinen über ein Flächengewicht von 50 g/m² bis zu 500 g/m². Dabei können sowohl das Gewebe als auch das Vlies jeweils ein Flächengewicht von 50 g/m² bis 200 g/m² aufweisen. Die Klebebeschichtung weist im Allgemeinen eine Grammatur von 50 g/m² bis 150 g/m² auf.

Im Ergebnis wird folglich die Verwendung eines Klebebandes als Wickelband zum Ummanteln von Kabeln zur Verfügung gestellt, welche nicht nur die typischen Anforderungen hinsichtlich Temperaturbeständigkeit und Medienbeständigkeit erfüllt. Sondern der zweischichtige Aufbau aus dem Gewebe und Vlies sorgt darüber hinaus für einen geräuschdämpfenden Effekt beim bestimmungsgemäßen Einsatz als Wickelband zum Ummanteln von Kabeln in Automobilen. Dabei kann das Klebeband grundsätzlich als Längsummantelung um die fraglichen Kabel geschlungen werden. Im Regelfall wird jedoch so vorgegangen, dass das Klebeband spiral- oder wendelförmig mit in Richtung auf die Kabel weisender Klebebeschichtung um die fraglichen Kabel herumgewickelt wird.

Als Folge hiervon weist die zweite Schicht aus dem Vlies nach innen. Da das Vlies aus einem aromatischen Polyamid bzw. entsprechenden aromatischen Polyamidfasern hergestellt ist, wird insbesondere eine hohe Schlagfestigkeit und Schnittfestigkeit zur Verfügung gestellt. Das demgegenüber darüber befindliche Gewebe trägt zusätzlich zu einer erhöhten Abriebbeständigkeit bei. Zusätzliche Schichten zur Realisierung des Trägers sind nicht erforderlich, gleichwohl möglich. Das heißt im Regelfall verfügt der bandförmige Träger abschließend über die erste Schicht aus dem Gewebe und die zweite Schicht aus dem Vlies.

Bei dem Vlies kann es sich generell um ein solches handeln, bei dem Fasern begrenzter Länge, also Stapelfasern zum Einsatz kommen. Darüber hinaus kann aber auch mit Endlosfasern bzw. Filamenten gearbeitet werden. Im Regelfall kommt ein Faservlies zum Einsatz, also ein solches, welches aus Stapelfasern aufgebaut ist. Die Fasern sind mechanisch vernadelt, und zwar durch Nadeln, Luft bzw. durch Wasserstrahlen. Dadurch wird das betreffende Vlies bzw. die zweite Schicht aus dem Vlies mit der notwendigen mechanischen Stabilität ausgerüstet.

Im Folgenden wird die Erfindung anhand einer lediglich ein Ausführungsbeispiel darstellenden Zeichnung näher erläutert; Es zeigen:
- Fig. 1: eine Klebeband, nicht gemäß der Erfindung und
- Fig. 2: das erfindungsgemäße Klebeband in einer zweiten bevorzugten Ausführungsform.

Bei dem erfindungsgemäßen Klebeband bzw. Wickelband zum Ummanteln von Kabeln 1 in Automobilen handelt es sich um ein solches, welches zunächst einmal mit einem bandförmigen textilen Träger 2, 3 ausgerüstet ist. Der bandförmige textile Träger 2, 3 setzt sich aus einer ersten Schicht 2 aus einem Gewebe und einer zweiten Schicht 3 aus einem Vlies zusammen. Die beiden Schichten 2, 3 sind nach dem Ausführungsbeispiel durch eine beide Schichten 2, 3 vollflächig miteinander koppelnde Polymerschicht 4 miteinander fest verbunden. Bei der Polymerschicht 4 kann es sich um eine Klebstoffschicht handeln. Alternativ oder zusätzlich können beide Schichten 2, 3 auch durch Fäden miteinander gekoppelt werden, die die beiden Schichten 2, 3 ähnlich wie Nähfaden bei einem Nähvlies durchdringen. Darüber hinaus ist noch eine Klebeschicht 5 vorgesehen, die auf die Seite des Trägers 3 aufgetragen ist.

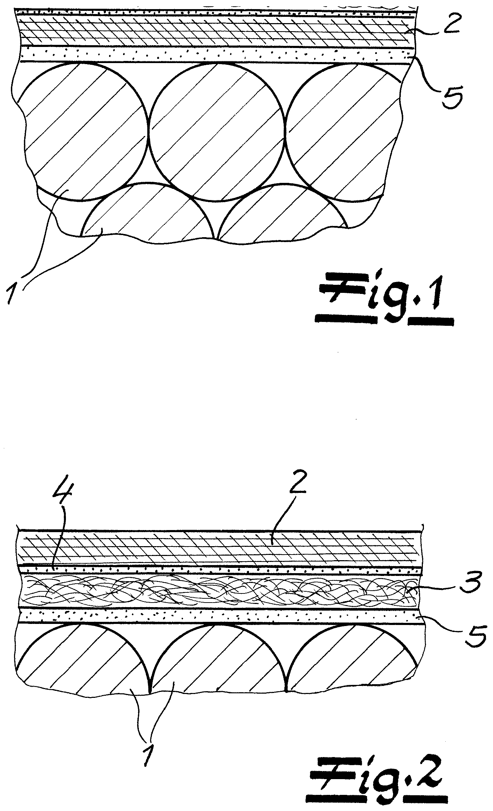

Nach der in Fig.1 dargestellten Ausführungsform, die nicht der Erfindung entspricht, wird die Klebeschicht 5 auf die erste Schicht bzw. das Gewebe aufgebracht. Demzufolge ist das Gewebe mit der darauf befindlichen Klebeschicht 5 nach innen in Richtung auf die zu ummantelnden Kabel 1 orientiert. Demgegenüber weist die zweite Schicht 3 aus dem Vlies in dem in der Fig. 1 dargestellten eingebauten Zustand nach außen. Bei der in Fig.2 dargestellten Ausführungsform gemäß der Erfindung ist die Anordnung umgekehrt.

Hier ist die zweite Schicht 3 aus dem Vlies mit der Klebeschicht 5 ausgerüstet. Demzufolge findet sich die zweite Schicht 3 aus dem Vlies in eingebautem Zustand nach innen weisend in Richtung auf die Kabel 1. Die erste Schicht 2 aus dem Gewebe ist in diesem Fall nach außen weisend in eingebautem Zustand orientiert.

Das Vlies bzw. die zweite Schicht 3 aus dem Vlies insgesamt aus einem aromatischen Polyamid hergestellt. Tatsächlich kommen an dieser Stelle Fasern aus dem fraglichen aromatischen Polyamid zum Einsatz, insbesondere Aramidfasern. Das Vlies bzw. die zweite Schicht 3 aus dem Vlies ist insgesamt als mechanisch verfestigtes Nadelvlies ausgebildet. Dazu kann das Vlies durch Wasserstrahlen oder Nadeln mechanisch verfestigt werden.

Bei der ersten Schicht 2 bzw. dem an dieser Stelle eingesetzten Gewebe handelt es sich um ein solches, bei dem die Kett- und Schussfäden aus Polyamid und/oder Polyester hergestellt sind. Die Feinheit der Kett- und Schussfäden mag dabei jeweils gleich ausgelegt sein. Typischerweise wird hier mit Feinheiten von mehr als 100 dtex für die Kett- und Schussfäden gearbeitet.

Der Träger 2, 3 ist insgesamt mit einem Flächengewicht von 50 g/m² bis 500 g/m² ausgerüstet. Außerdem verfügt der Träger 2, 3 bzw. das Klebeband insgesamt über eine Abriebbeständigkeit zumindest der Klasse C nach LV 312. Im Regelfall wird eine Abriebbeständigkeit wenigstens der Klasse D beobachtet. Zusätzlich ist der Träger 2, 3 und folglich das Klebeband insgesamt auch noch schlagfest entsprechend den Vorgaben in der LV 312 gestaltet.

Die Klebebeschichtung 5 wird im Allgemeinen mit einer Grammatur zwischen 50 g/m² bis 150 g/m² auf die erste Schicht 2 bzw. das Gewebe aufgebracht. Hier haben sich übliche Schmelzkleber wie beispielsweise solche auf Acrylatbasis als besonders günstig erwiesen, die beispielhaft durch ein Düsenauftragsverfahren auf die betreffende erste Schicht 2 aus dem Gewebe aufgetragen werden können.

## Patentansprüche

1. Verwendung eines Klebebandes als Wickelband zum Ummanteln von Kabeln (1) in Automobilen, mit einem bandförmigen textilen Träger (2, 3), welcher zumindest eine erste Schicht (2) aus einem Gewebe und eine zweite Schicht (3) aus einem Vlies aufweist, die durch eine Polymerschicht (4) und/oder durch beide Schichten (2, 3) durchdringende Fäden miteinander gekoppelt sind, und mit einer auf wenigstens eine Seite des Trägers (2, 3) aufgetragenen Klebeschicht (5),
**dadurch gekennzeichnet, dass**
das Vlies aus einem aromatischen Polyamid hergestellt ist und die zweite Schicht (3) aus dem Vlies in eingebautem Zustand nach innen weist.

2. Verwendung nach Anspruch 1, **dadurch gekennzeichnet, dass** die zweite Schicht (3) aus dem Vlies mit der Klebeschicht (5) ausgerüstet ist.

3. Verwendung nach einem der Ansprüche 1 bis 2, **dadurch gekennzeichnet, dass** das Vlies als mechanisch verfestigtes Nadelvlies ausgebildet ist.

4. Verwendung nach Anspruch 3, **dadurch gekennzeichnet, dass** das Vlies durch Wasserstrahlen und/oder Luft und/oder Nadeln mechanisch verfestigt ist.

5. Verwendung nach einem der Ansprüche 1 bis 4, **dadurch gekennzeichnet, dass** das Gewebe Fäden aus Polyamid und/oder Polyester aufweist.

6. Verwendung nach einem der Ansprüche 1 bis 5, **dadurch gekennzeichnet, dass** der Träger (2, 3) ein Flächengewicht von 50 g/m² bis 500 g/m² aufweist.

7. Verwendung nach einem der Ansprüche 1 bis 6, **dadurch gekennzeichnet, dass** dieses eine Abriebbeständigkeit zumindest der Klasse C, insbesondere der Klasse D nach LV 312 aufweist und zusätzlich schlagfest nach LV 312 ausgebildet ist.

8. Verwendung nach einem der Ansprüche 1 bis 7, **dadurch gekennzeichnet, dass** das Gewebe und das Vlies jeweils ein Flächengewicht von 50 g/m² bis 200 g/m² aufweisen.

9. Verwendung nach einem der Ansprüche 1 bis 8, **dadurch gekennzeichnet, dass** die Klebebeschichtung mit einer Grammatur zwischen 50 und 150 g/m² auf den Träger (2, 3) aufgebracht ist.

## Claims

1. Use of an adhesive tape as wrapping tape for sheathing cables (1) in automobiles, with a strip-like textile carrier (2, 3) which has at least a first layer (2) of a woven fabric and a second layer (3) of a nonwoven, which are coupled to each other by a polymer layer (4) and/or by threads that penetrate both layers (2, 3), and with an adhesive layer (5) applied to at least one side of the carrier (2, 3),
**characterized in that**
the nonwoven is produced from an aromatic polyamide, and the second layer (3), made of the nonwoven, faces inwards in the installed state.

2. Use according to Claim 1, **characterized in that** the second layer (3) made of the nonwoven is equipped with the adhesive layer (5).

3. Use according to one of Claims 1 or 2, **characterized in that** the nonwoven fabric is designed as a mechanically compacted needled fleece.

4. Use according to Claim 3, **characterized in that** the nonwoven fabric is compacted mechanically by water jets and/or air and/or needles.

5. Use according to any one of Claims 1 to 4, **characterized in that** the woven fabric has threads of polyamide and/or polyester.

6. Use according to any one of Claims 1 to 5, **characterized in that** carrier (2, 3) has a basis weight from 50 g/m² to 500 g/m².

7. Use according to any one of Claims 1 to 6, **characterized in that** it has an abrasion resistance of at least class C, in particular class D according to LV 312 and is also designed to be impact resistant according to LV 312.

8. Use according to any one of Claims 1 to 7, **characterized in that** the woven fabric and the nonwoven each have a basis weight from 50 g/m² to 200 g/m².

9. Use according to any one of Claims 1 to 8, **characterized in that** the adhesive coating is applied to the carrier (2, 3) with a grammage between 50 and 150 g/m².

## Revendications

1. Utilisation d'une bande adhésive en tant que bande d'enroulement pour envelopper des câbles (1) dans le secteur automobile, avec un support textile (2, 3) en forme de bande, lequel comporte au moins une première couche (2) dans un tissu et une deuxième couche (3) dans un matériau non-tissé, qui sont couplées entre elles par une couche de polymère (4) et/ou des fils traversant les deux couches (2, 3), et avec une couche d'adhésif (5) appliquée sur au moins un côté du support (2, 3),
**caractérisée en ce que**
le matériau non-tissé est fabriqué dans un polyamide aromatique et la deuxième couche (3) dans un matériau non-tissé est tournée vers l'intérieur à l'état incorporé.

2. Utilisation selon la revendication 1, **caractérisée en ce que** la deuxième couche (3) de matériau non-tissé est dotée de la couche d'adhésif (5).

3. Utilisation selon l'une quelconque des revendications 1 à 2, **caractérisée en ce que** le matériau non-tissé est constitué sous la forme d'un non-tissé aiguilleté renforcé mécaniquement.

4. Utilisation selon la revendication 3, **caractérisée en ce que** le matériau non-tissé est renforcé mécaniquement par des jets d'eau et/ou de l'air et/ou des aiguilles.

5. Utilisation selon l'une quelconque des revendications 1 à 4, **caractérisée en ce que** le tissu comporte des fils de polyamide et/ou de polyester.

6. Utilisation selon l'une quelconque des revendications 1 à 5, **caractérisée en ce que** le support (2, 3) comporte un grammage de 50 g/m² à 500 g/m².

7. Utilisation selon l'une quelconque des revendications 1 à 6, **caractérisée en ce que** ce système comporte une résistance à l'abrasion au moins de Catégorie C, en particulier de Catégorie D conformément à LV 312 et est en plus constitué résistant aux chocs selon LV 312.

8. Utilisation selon l'une quelconque des revendications 1 à 7, **caractérisée en ce que** le tissu et le matériau non-tissé comportent respectivement un grammage de 50 g/m² à 200 g/m².

9. Utilisation selon l'une quelconque des revendications 1 à 8, **caractérisée en ce que** le revêtement adhésif est appliqué avec sur le support (2, 3) avec un grammage se situant entre 50 g/m² et 150 g/m².
